# DEMANDE DE BREVET EUROPEEN

(11) **EP 0 965 556 A1**
(43) Date de publication de la demande: **22.12.1999**
(21) Numéro de dépôt: 99401516.2
(22) Date de dépôt: 18.06.1999
(51) Int. Cl.: B66C 23/00, B66C 11/12, B66C 9/14, B25J 5/04

(54) **Dispositif de manipulationde charges, en particulier pour le levage et le transport de charges**

(30) Priorité: 19.06.1998 FR 9807771
(71) Demandeur: Technorop Automation, 44980 Sainte Luce sur Loire (FR)
(72) Inventeur: Rousse, Jean-Paul, 44300 Nantes (FR)
(74) Mandataire: Dawidowicz, Armand

(57) **Abrégé**

L'invention concerne un dispositif (1) de manipulation de charges constitué d'au moins un chariot (2) entraîné en déplacement le long de rails horizontaux respectivement d'axe X et Y, par l'intermédiaire d'au moins un dispositif (5, 6) d'entraînement en déplacement du chariot (2) et d'un mât (7) rigide porte-charge relié à son extrémité supérieure au chariot (2).

Ce dispositif est caractérisé en ce que le mât (7) est agencé pour pouvoir être animé d'un mouvement relatif par rapport au chariot (2) lorsqu'il est soumis à un effort exercé manuellement par un opérateur et en ce que les dispositifs d'entraînement (5, 6) en déplacement du chariot (2) le long d'organes de guidage (3, 4) sont asservis en fonctionnement à la position relative du mât (7) par rapport au chariot (2).

## Description

La présente invention concerne un dispositif de manipulation de charges, en particulier pour le levage et le transport de charges.

Elle concerne plus particulièrement un dispositif de manipulation de charges du type constitué d'au moins un chariot entraîné en déplacement le long d'organes de guidage, tels que des rails, généralement horizontaux, suivant au moins un axe dit axe X ou suivant deux axes dits axe X et axe Y, par l'intermédiaire d'un ou plusieurs dispositifs d'entraînement en déplacement en X et/ou en Y du chariot, d'un mât rigide porté à ou au voisinage de son extrémité supérieure par ledit chariot, ce mât étant équipé à son extrémité inférieure d'un dispositif de préhension de charges.

Les dispositifs de manipulation de charges du type précité sont bien connus à ceux versés dans cet art. Il existe deux grandes catégories de dispositifs de manipulation de charges: les dispositifs de manipulation de charges dits manuels et les dispositifs de manipulation de charges dits motorisés.

Les dispositifs de manipulation de charges manuels sont généralement constitués d'un mât porté par un chariot installé soit sur un système de guidage constitué généralement de rails X, Y, soit sur une potence. Le déplacement du mât le long du système de guidage est obtenu par un effort physique de l'opérateur. L'inconvénient majeur de tels dispositifs de manipulation est lié à l'effort physique demandé à l'opérateur. Il en résulte, après un certain nombre de manipulations d'un tel dispositif, une fatigue importante de l'opérateur.

La seconde catégorie des dispositifs de manipulation de charges est constituée par des dispositifs motorisés qui se distinguent des dispositifs de manipulation de charges manuels uniquement par le fait que le déplacement du mât le long des rails de guidage est effectué à l'aide d'un ou plusieurs moteurs dont le fonctionnement est commandé par l'opérateur au moyen généralement d'un boîtier ou d'un levier de commande disposé à l'extrémité inférieure du mât ou au voisinage de ce dernier et directement accessible par l'opérateur. Un tel dispositif est notamment décrit dans le brevet FR-A-1.180.090.

De tels dispositifs de manipulation de charges permettent d'éviter l'inconvénient majeur des dispositifs de manipulation de charges manuels. Toutefois, l'obligation pour l'opérateur d'agir sur un boîtier ou sur un levier de commande contraint ce dernier à détourner son attention de la charge manipulée par le dispositif de manipulation de charges. Il peut en résulter des risques d'accident. Par ailleurs, la manipulation des organes de commande des moteurs génère une perte de temps au niveau des opérations de manipulation.

Par ailleurs, la plupart des dispositifs de manipulation de charges sont équipés d'un bras ou d'un câble porte-charge relié à pivotement au reste du dispositif. De tels exemples de dispositifs de manipulation sont notamment décrits dans le brevet EP-0.471.026 ou le brevet US-4.471.877. Le bras ou câble de tels dispositifs est, dans le cas d'une manipulation manuelle, incliné dans une première direction avec le risque de provoquer, par réaction, sous l'effet de la charge disposée à l'extrémité du bras ou câble, un balancement du bras ou câble dans une direction opposée, ce déplacement intempestif pouvant blesser l'opérateur. Il est donc impératif dans de tels dispositifs d'équilibrer parfaitement la charge. De ce fait, une telle conception de ces dispositifs limite les possibilités de commande de mouvement de la charge par action directe sur le mât ou le câble.

Le but de la présente invention est donc de proposer un dispositif de manipulation de charges du type précité dans lequel l'opérateur n'a pas à agir sur un organe de commande déterminé pour provoquer le déplacement du mât.

Un autre but de la présente invention est de proposer un dispositif de manipulation de charges dans lequel, du fait de la conception du mât, la charge est déplacée automatiquement en suivant les mouvements de l'opérateur sans effort physique de ce dernier et sans risque de blesser ce dernier.

Un autre but de la présente invention est de proposer un dispositif de manipulation de charges dont la conception permet, malgré sa grande flexibilité, la conservation d'un mât vertical rigide qui permet la manipulation de charges en porte-à-faux.

A cet effet, l'invention a pour objet un dispositif de manipulation de charges, en particulier pour le levage et le transport de charges, du type constitué d'au moins un chariot entraîné en déplacement le long d'organes de guidage, tels que des rails, généralement horizontaux, suivant au moins un axe dit axe X ou suivant deux axes dits axe X et axe Y par l'intermédiaire d'un ou plusieurs dispositifs d'entraînement en déplacement en X et/ou en Y du chariot, d'un mât rigide porté à ou au voisinage de son extrémité supérieure par ledit chariot, ce mât étant équipé à son extrémité inférieure d'un dispositif de préhension de charges, caractérisé en ce que le mât est agencé pour pouvoir être animé d'un mouvement relatif par rapport au chariot et se déplacer parallèlement à lui-même à l'intérieur d'une plage de déplacement déterminée par rapport au chariot lorsqu'il est soumis à une force, telle qu'une traction ou une poussée, exercée manuellement par un opérateur et en ce que le ou les dispositifs d'entraînement en déplacement en X et/ou en Y du chariot le long des organes de guidage sont asservis en fonctionnement à la position relative du mât par rapport au chariot.

Grâce à cette conception, le simple exercice d'une traction ou d'une poussée sur le mât, en un emplacement quelconque de ce dernier, par l'opérateur permet l'actionnement du ou des dispositifs d'entraînement en déplacement dudit mât avec sa charge associée dans la direction correspondant à celle dans laquelle l'opérateur a exercé un effort sur ledit mât.

Par ailleurs, la poussée ou la traction exercée sur le mât peut être exercée en un emplacement quelconque de ce dernier, que ce soit sur le dispositif de préhension disposé à l'extrémité inférieure du mât ou sur le mât lui-même, voire sur la charge portée par le dispositif de préhension de sorte que l'opérateur n'a pas besoin de modifier la position de ses mains apposées sur l'un quelconque des éléments précités du dispositif pour déplacer la charge.

Selon une forme de réalisation préférée de l'invention, le mât est relié audit chariot par des organes autorisant respectivement un mouvement relatif suivant l'axe X, ou respectivement suivant l'axe Y, du mât par rapport au chariot, la position relative en X du mât par rapport au chariot déterminant l'état (marche ou arrêt et éventuellement sens de fonctionnement) du ou des dispositif(s) d'entraînement en déplacement en X du chariot tandis que la position relative en Y du mât par rapport au chariot détermine l'état (marche ou arrêt et éventuellement sens de fonctionnement) du ou des dispositif(s) d'entraînement en déplacement en Y du chariot.

Grâce à cette conception de la liaison entre mât et chariot, l'opérateur peut, sans effort intellectuel ou physique, déplacer le mât et par suite le dispositif de préhension et sa charge dans la direction souhaitée. Contrairement aux dispositifs classiques de manipulation où la liaison entre mât et chariot est une liaison à pivotement, dans le dispositif objet de l'invention, la liaison entre mât et chariot autorise un déplacement à coulissement des points d'appui ou de suspension du mât par rapport au chariot. La tête de mât est donc montée, directement ou par l'intermédiaire d'organes de liaison appropriés, à contact d'appui glissant sur le chariot, ce qui permet un déplacement en translation du mât parallèlement à lui-même et une modification de la position du mât par rapport au chariot.

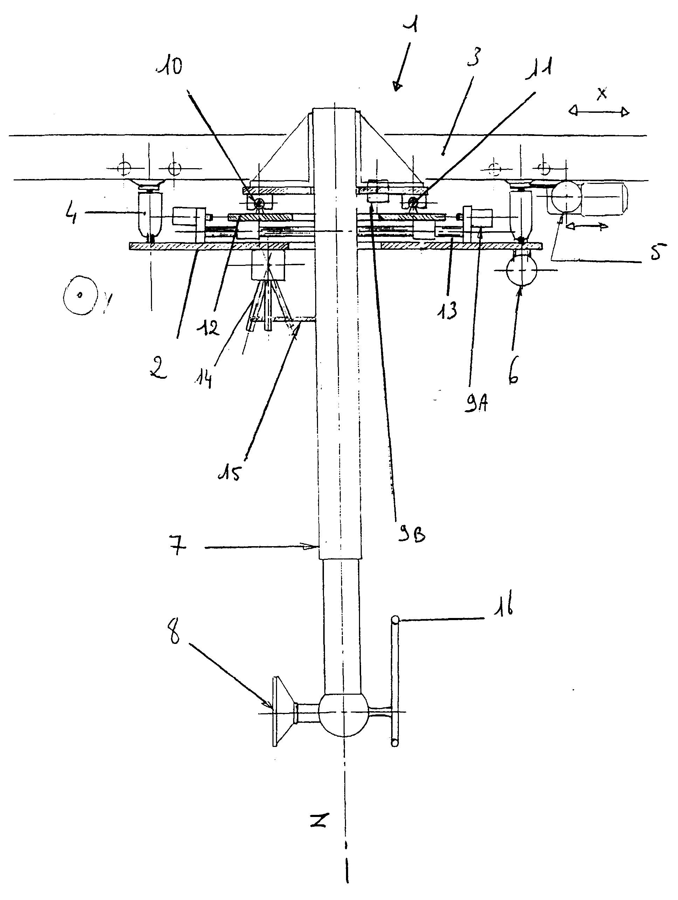

L'invention sera bien comprise à la lecture de la description suivante d'un exemple de réalisation, en référence à la figure unique qui représente une vue schématique en coupe d'un dispositif de manipulation de charges conforme à l'invention

Le dispositif de manipulation de charges, objet de l'invention, est représenté à la figure unique par la référence générale 1. Ce dispositif de manipulation de charges peut être utilisé notamment pour le levage de charges et/ou le transfert de charges d'un emplacement en un autre. Les applications d'un tel dispositif de manipulation de charges sont diverses et variées. Ces applications sont toutefois bien connues puisqu'elles sont similaires à celles des dispositifs de manipulation de charges classiques.

De manière également en soi connue, ce dispositif de manipulation de charges est constitué d'au moins un chariot 2 entraîné en déplacement le long d'organes de guidage 3, 4, tels que des rails ou des glissières, généralement horizontaux, suivant au moins un axe, dit axe X, ou suivant deux axes, dits axe X et Y. Les organes de guidage 3, 4 peuvent être de conception plus ou moins complexe pour permettre un déplacement du chariot suivant une (X ou Y) ou plusieurs directions (X et Y). De même, les axes X ou Y sont généralement perpendiculaires entre eux. Toutefois, toute autre disposition des axes X et Y peut également être envisagée.

Généralement, ce chariot 2 est entraîné en déplacement par l'intermédiaire de dispositifs 5, 6 d'entraînement en déplacement en X et/ou en Y. Ces dispositifs 5, 6 d'entraînement en déplacement sont généralement constitués par des trolleys motorisés. Dans l'exemple représenté, les organes de guidage du chariot 2 sont constitués par des rails de guidage 3 d'axe X et des rails de guidage 4 d'axe Y. Les rails de guidage d'axe X sont généralement au nombre de deux et sont disposés parallèles. Il en est de même pour les rails de guidage 4 d'axe Y. Des dispositifs 5, 6 d'entraînement en déplacement en X et/ou en Y du chariot 2 le long des organes de guidage 3 et 4 sont agencés de telle sorte qu'au moins un premier dispositif 6 d'entraînement, à savoir le dispositif d'entraînement en Y dans l'exemple représenté, entraîne en déplacement le chariot 2 le long de premiers organes de guidage 4, à savoir les rails 4 en Y, et en ce qu'au moins un second dispositif 5 d'entraînement, à savoir le dispositif d'entraînement en X dans l'exemple représenté, entraîne en déplacement le chariot 2 et les premiers organes de guidage 4, à savoir les rails 4 en Y, l'ensemble formant un chariot roulant suspendu le long des seconds organes de guidage 3, à savoir les rails 3 en X, ces rails 3 en X s'étendant de préférence orthogonalement auxdits premiers organes de guidage 4. Là encore, le positionnement et la conception de ces dispositifs d'entraînement en déplacement en X et/ou en Y sont à la portée de tout homme du métier.

Ce chariot 2, entraîné en déplacement par les dispositifs 5 et 6 le long respectivement des rails 3 et 4, porte au moins un mât 7 vertical rigide, ce mât 7 étant relié, à, ou au voisinage de, son extrémité supérieure, audit chariot 2. Ce mât 7 est équipé, de manière en soi connue, à son extrémité inférieure, d'un dispositif 8 de préhension de charges. Ce dispositif 8 de préhension de charges peut affecter un grand nombre de formes. Il peut être du type à crochets, à fourches, à ventouses, etc. Dans l'exemple représenté, ce dispositif 8 de préhension est du type à ventouses. Une poignée de manoeuvre 16 peut être disposée sur le mât 7 au voisinage de ce dispositif de préhension, bien que cette poignée de manoeuvre ne soit en aucun cas obligatoire. Le dispositif 8 de préhension est généralement disposé sur le mât 7 de telle sorte qu'il peut être monté à rotation autour de l'axe longitudinal vertical du mât. Par ailleurs, mât 7 et dispositif 8 de préhension sont généralement équipés d'un dispositif d'équilibrage de charges en soi connu, ce qui permet un déplacement selon l'axe Z à la figure unique du dispositif 8 de préhension de charges. La conception de l'ensemble du mât 7 et du dispositif 8 de préhension, en soi connue, permet le déplacement de charges disposées en porte-à-faux sur ledit mât 7.

Le transfert de charges d'un emplacement en un autre est obtenu par l'action d'une poussée ou d'une traction exercée sur ledit mât 7 par l'opérateur. Cette traction ou cette poussée peut être exercée en un emplacement quelconque dudit mât 7 que ce soit sur le mât proprement dit, ou sur le dispositif 8 de préhension, ou sur la poignée 16 de manoeuvre, ou sur la charge portée par le dispositif 8 de préhension.

Ce mât 7 est agencé pour pouvoir être animé d'un mouvement relatif par rapport au chariot 2 et se déplacer parallèlement à lui-même à l'intérieur d'une plage de déplacement déterminée par rapport au chariot 2 lorsqu'il est soumis à une traction ou à une poussée exercées manuellement par l'opérateur. En effet, comme le montre la figure unique, le mât 7 est relié à son extrémité supérieure au chariot 2 par des organes autorisant un mouvement relatif suivant l'axe X ou suivant l'axe Y du mât 7 par rapport au chariot 2. De manière plus détaillée, le mât 7 est équipé de paliers de guidage 10 coopérant avec des rails de guidage 11 d'axe X ou Y, en l'occurrence d'axe Y dans la figure, portés par une platine 12 elle-même montée libre à coulissement sur des rails de guidage 13 disposés orthogonalement auxdits premiers rails de guidage 11. Ces seconds rails de guidage 13 sont portés par le chariot 2 et sont montés stationnaires sur ce dernier. Ainsi, lorsque le mât 7 est soumis à une traction ou à une poussée exercées par l'opérateur, ce mât 7 peut se déplacer suivant l'axe longitudinal des rails 11 et/ou suivant l'axe longitudinal des rails 13.

Par ailleurs, les dispositifs 5 et 6 d'entraînement en déplacement en X et/ou en Y du chariot 2 sur les organes de guidage 3, 4 sont asservis en fonctionnement à la position relative du mât 7 par rapport au chariot 2. De ce fait, la position relative en X du mât 7 par rapport au chariot 2 détermine l'état (marche ou arrêt et sens de fonctionnement) du dispositif 5 d'entraînement en déplacement en X du chariot 2, tandis que la position relative en Y du mât 7 par rapport au chariot 2 détermine l'état (marche ou arrêt et sens de fonctionnement) du dispositif 6 d'entraînement en déplacement en Y du chariot 2. Ces dispositifs 5, 6 d'entraînement en déplacement en X et/ou en Y du chariot 2 comportent généralement deux sens de fonctionnement de manière à permettre un déplacement axial du chariot 2 dans une direction ou dans sa direction opposée. Ainsi, par exemple, dans l'exemple représenté, lorsque le mât 7 est déplacé vers la gauche dans la figure, ce mât 7 coulisse librement le long des rails 13 à l'intérieur d'une plage de déplacement déterminée fonction du jeu entre le bord de la platine 12 et un vérin 9A qui sera décrit ci-après. Au cours de ce déplacement, le mât 7 commande le fonctionnement du trolley motorisé 5 qui génère le déplacement des organes de guidage suivant l'axe Y 4 et du chariot 2 le long des organes de guidage suivant l'axe X 3. De la même manière, lorsque le mât 7 est déplacé orthogonalement au plan de la feuille en direction de la feuille, il coulisse le long des rails de guidage 11 à l'intérieur d'une plage de déplacement déterminée fonction du jeu entre le bord de la platine 12 et un vérin 9B qui sera décrit ci-après. Ce mât 7 commande, de par son déplacement, le fonctionnement du trolley motorisé 6 et par suite le déplacement du chariot 2 le long des organes de guidage 4. Bien évidemment, dans certaines positions relatives du mât 7, à la fois le dispositif 5 d'entraînement en déplacement du chariot suivant l'axe X et le dispositif 6 d'entraînement en déplacement du chariot suivant l'axe Y fonctionnent. Par ailleurs, le sens de déplacement du mât 7 sur les rails 11, 13 permet de déterminer le sens de fonctionnement du dispositif d'actionnement correspondant. Ainsi, un déplacement vers la gauche le long des rails 13 du mât 7 génère un fonctionnement du dispositif 5 d'actionnement en X provoquant un déplacement des rails de guidage 4 et du chariot 2 vers la gauche et inversement, lorsque le mât 7 sera déplacé vers la droite. Toutefois, il pourrait également être imaginé un doublement du nombre des dispositifs d'entraînement en déplacement du chariot de sorte que chaque dispositif disposerait d'un seul sens de fonctionnement.

Il est prévu, entre chariot 2 et mât 7, des moyens pour ramener le mât 7 dans une position relative initiale par rapport au chariot 2. Cette position relative initiale correspond à celle représentée dans la figure. Elle correspond à une position du mât 7 dans laquelle chaque dispositif 5, 6 d'entraînement en déplacement en X et/ou en Y du chariot 2 ne génère aucun déplacement dudit chariot 2. Dans l'exemple représenté, les moyens pour ramener le mât 7 dans une position relative initiale sont des moyens de rappel, tels que des vérins 9A, 9B disposés entre chariot 2 et mât 7. Dans l'exemple représenté, le dispositif comporte quatre vérins fonctionnant par paires, une première paire servant au repositionnement, en particulier au recentrage du mât 7 par rapport au chariot 2 suivant l'axe X, l'autre paire de vérins, à savoir la paire 9B, servant au recentrage du mât 7 par rapport au chariot 2 suivant l'axe Y. Bien évidemment, le recentrage s'effectue par rapport à la plage de déplacement autorisée du mât 7. On note que dans l'exemple représenté, le chariot 2 affecte sensiblement la forme d'un cadre.

Les moyens d'asservissement en fonctionnement des dispositifs 5, 6 d'entraînement en déplacement en X et/ou en Y du chariot 2 peuvent affecter un grand nombre de formes. Ils peuvent par exemple être constitués par des moyens de détection de la position du mât 7 par rapport au chariot 2, tels que des capteurs optiques solidaires en déplacement du chariot 2, le chariot 2 parcourant le champ de ces capteurs. Toutefois, l'une des solutions préférées est celle représentée à la figure unique. Dans ce cas, les moyens d'asservissement en fonctionnement des dispositifs 5, 6 d'entraînement en déplacement en X et/ou en Y du chariot 2 sont constitués par un commutateur à tige 14 disposé entre mât 7 et chariot 2. Ce commutateur à tige 14 est actionné en déplacement, en particulier déplacé angulairement, par le mât 7 lorsque ce dernier est soumis à une traction ou à une poussée à résultante horizontale exercée manuellement par l'opérateur.

Ce commutateur à tige 14 est représenté à la figure dans diverses positions. Ce commutateur à tige 14 présente la base de sa tige montée à pivotement sur le chariot 2. L'extrémité libre de la tige du commutateur 14 vient en prise avec un bras 15 disposé radialement sur le mât 7. Ce bras 15 provoque, au cours du déplacement du mât 7, un déplacement angulaire de la tige du commutateur et, par suite, la commande des différents dispositifs 5, 6 d'actionnement en déplacement en X et/ou en Y du chariot. Ce commutateur à tige présente l'avantage d'être un organe de commande particulièrement précis et permet de manière aisée un déplacement à la fois en X et en Y du mât 7.

Il est à noter que la commande des dispositifs 5, 6 d'actionnement en déplacement du chariot 2 peut être de type tout ou rien ou de type proportionnel. En effet, dans un premier mode de réalisation de l'invention, les dispositifs d'entraînement en déplacement du chariot 2 entraînent ce dernier en déplacement à une vitesse constante dès que le mât 7 occupe par rapport au chariot 2 une autre position que la position relative initiale définie ci-dessus. Dans un second mode de réalisation, la vitesse de déplacement du chariot 2, entraîné en déplacement par les dispositifs 5, 6 d'actionnement en déplacement, est fonction de la position relative du mât 7 par rapport au chariot 2 ou, en d'autres termes, fonction de la position angulaire du commutateur à tige 14. Ainsi, en position initiale du mât 7 correspondant à une vitesse nulle du chariot 2, le commutateur à tige s'étend verticalement. Au cours de la modification de la position relative du mât 7 par rapport au chariot 2 ou, en d'autres termes, au cours du déplacement angulaire du commutateur 14, la vitesse de déplacement du chariot 2 augmente avec une augmentation de l'inclinaison du commutateur à tige par rapport à la verticale, de préférence de manière directement proportionnelle. A l'inverse, la vitesse du chariot 2 décroît avec une réduction de l'inclinaison du commutateur à tige par rapport à la verticale.

En conclusion, la manipulation du mât 7 d'un tel dispositif de manipulation de charges devient extrêmement aisée. Il suffit à l'opérateur d'exercer une force quelconque sur le mât en un emplacement quelconque de ce dernier pour générer un déplacement automatique de ce mât dans la direction souhaitée correspondant à la direction dans laquelle l'opérateur a exercé son effort. Les opérations de manipulation de charges s'en trouvent alors grandement facilitées.

## Revendications

1. Dispositif (1) de manipulation de charges, en particulier pour le levage et le transport de charges, du type constitué d'au moins un chariot (2) entraîné en déplacement le long d'organes de guidage (3, 4), tels que des rails, généralement horizontaux, suivant au moins un axe, dit axe X, ou suivant deux axes, dits axe X et axe Y, par l'intermédiaire d'un ou plusieurs dispositifs (5, 6) d'entraînement en déplacement en X et/ou en Y du chariot (2), d'un mât (7) rigide porté à, ou au voisinage de, son extrémité supérieure par ledit chariot (2), ce mât (7) étant équipé à son extrémité inférieure d'un dispositif de préhension de charges (8),
caractérisé en ce que le mât (7) est agencé pour pouvoir être animé d'un mouvement relatif par rapport au chariot (2) et se déplacer parallèlement à lui-même à l'intérieur d'une plage de déplacement déterminée par rapport au chariot (2) lorsqu'il est soumis à une force, telle qu'une traction ou une poussée, exercée manuellement par un opérateur et en ce que le ou les dispositifs d'entraînement (5, 6) en déplacement en X et/ou en Y du chariot (2) le long des organes de guidage (3, 4) sont asservis en fonctionnement à la position relative du mât (7) par rapport au chariot (2).

2. Dispositif de manipulation de charges selon la revendication 1,
caractérisé en ce que le mât (7) est relié audit chariot (2) par des organes (10, 11), (12, 13) autorisant respectivement un mouvement relatif suivant l'axe X ou respectivement suivant l'axe Y du mât (7) par rapport au chariot (2), la position relative en X du mât (7) par rapport au chariot (2) déterminant l'état (marche ou arrêt et éventuellement le sens de fonctionnement) du ou des dispositifs (5) d'entraînement en déplacement en X du chariot (2) tandis que la position relative en Y du mât (7) par rapport au chariot (2) détermine l'état (marche ou arrêt et éventuellement le sens de fonctionnement) du ou des dispositif(s) (6) d'entraînement en déplacement en Y du chariot (2).

3. Dispositif de manipulation de charges selon l'une des revendications 1 et 2,
caractérisé en ce qu'il est prévu, entre chariot (2) et mât (7), des moyens pour ramener le mât (7) dans une position relative initiale par rapport au chariot (2), cette position relative initiale correspondant à une position du mât (7) dans laquelle chaque dispositif (5, 6) d'entraînement en déplacement en X et/ou en Y du chariot (2) ne génère aucun déplacement dudit chariot (2).

4. Dispositif de manipulation de charges selon la revendication 3,
caractérisé en ce que les moyens pour ramener le mât (7) dans une position relative initiale sont des moyens de rappel, tels que des vérins (9A, 9B), disposés entre chariot (2) et mât (7).

5. Dispositif de manipulation de charges selon l'une des revendications 1 à 4,
caractérisé en ce que les moyens d'asservissement en fonctionnement des dispositifs (5, 6) d'entraînement en déplacement en X et/ou en Y du chariot (2) sont constitués par un commutateur à tige (14) disposé entre mât (7) et chariot (2), ce commutateur à tige (14) étant actionné en déplacement, en particulier déplacé angulairement, par le mât (7) lorsque ce dernier est soumis à une traction ou à une poussée exercée manuellement par l'opérateur.

6. Dispositif de manipulation de charges selon la revendication 5,
caractérisé en ce que la vitesse de déplacement du chariot (2) entraîné en déplacement par les dispositifs (5, 6) d'entraînement augmente avec l'augmentation de l'inclinaison du commutateur à tige (14) par rapport à la verticale.

7. Dispositif de manipulation de charges selon l'une des revendications 1 à 6,
caractérisé en ce que les dispositifs (5, 6) d'entraînement en déplacement en X et/ou en Y du chariot (2) le long des organes de guidage (3, 4) sont agencés de telle sorte qu'au moins un premier dispositif d'entraînement (6) entraîne en déplacement le chariot (2) le long de premiers organes de guidage (4), tels que des rails ou glissières, et qu'au moins un second dispositif d'entraînement (5) entraîne en déplacement le chariot (2) et ces premiers organes de guidage (4) formant un chariot roulant suspendu le long de seconds organes de guidage (3), tels que des rails ou glissières, s'étendant de préférence orthogonalement auxdits premiers organes de guidage (4).

8. Dispositif de manipulation de charges selon l'une des revendications 1 à 7,
caractérisé en ce que le mât (7) est équipé de paliers de guidage (10) coopérant avec des rails de guidage (11), d'axe X ou Y, portés par une platine (12) elle-même montée libre à coulissement sur des rails de guidage (13) disposés orthogonalement auxdits premiers rails de guidage (11), ces seconds rails de guidage (13) étant portés par ledit chariot (2).
